# EUROPÄISCHE PATENTSCHRIFT

(11) **EP 0 890 304 B1**
(45) Veröffentlichungstag und Bekanntmachung des Hinweises auf die Patenterteilung: **29.12.2004**
(21) Anmeldenummer: 98112320.1
(22) Anmeldetag: 03.07.1998
(51) Int. Cl.: A01K 1/12, A01K 11/00, A01K 29/00, G06F 1/18

(54) **Verfahren zur Automatisierung der landwirtschaftlichen Milchviehhaltung**
Method for automatisation of agricultural dairy husbandry
Méthode et dispositif pour l'automatisation de l'élevage de bétail laitier

(30) Priorität: 03.07.1997 DE 19728415
(43) Veröffentlichungstag der Anmeldung: 13.01.1999
(73) Patentinhaber: Boekhoff, Volker, 26789 Leer (DE)
(72) Erfinder: Boekhoff, Volker, 26789 Leer (DE)
(74) Vertreter: Möller, Friedrich, Dipl.-Ing.

(56) Entgegenhaltungen:
- EP-A- 0 551 956
- EP-A- 0 636 313
- EP-A- 0 638 231
- EP-A- 0 808 567
- WO-A-92/17026
- WO-A-96/00003
- DE-A- 19 521 570
- FR-A- 2 705 192
- US-A- 4 684 089
- US-A- 5 021 763
- US-A- 5 281 018

## Beschreibung

Die Erfindung betrifft ein Verfahren zur Automatisierung der landwirtschaftlichen Milchviehhaltung.

Der gerade im landwirtschaftlichen Bereich zunehmende Kostendruck erfordert eine Tierhaltung unter Einhaltung optimaler Bedingungen. Bei großen Tierherden ist das mit herkömmlichen Methoden nicht mehr möglich.

Vor allem bei der Milchviehhaltung ist es wichtig, optimale Bedingungen zu schaffen und auch einzuhalten, um eine maximal mögliche Milchleistung der Tiere zu gewährleisten. Diese Milchleistung hängt nicht nur von einer entsprechenden Fütterung der Tiere ab, entscheidend ist vielmehr ihr Gesundheitszustand, wie zum Beispiel die genaue Kenntnis der Lactations-, Trächtigkeits- und Fruchtbarkeitsperioden. Schließlich kommt es darauf an, dass der Melkvorgang an das jeweilige Tier angepasst wird. Diese Parameter lassen sich vor allem bei größeren Herden nicht mehr von einer Betreuungsperson mit ausreichender Zuverlässigkeit einhalten. Als problematisch hat sich erwiesen, wenn - wie bei größeren Betrieben üblich - mehrere Personen Einfluss auf das Melkgeschehen bzw. die Tiere nehmen oder die Personen wechseln. Man ist dann auf Aufzeichnungen angewiesen, die zum Teil unverständlich bzw. unvollständig sein können und keine Gewähr bieten, dass sie auch befolgt werden.

Aus der DE 195 21 570 A sind ein Verfahren und eine Vorrichtung zum Steuern von freilaufenden Tieren bekannt. Die Tiere tragen Identifizierungsmittel. Die Identifizierungsmittel sollen die Tiere veranlassen, bestimmte vom Tierbetreuer gewünschte Bereiche, und zwar insbesondere einen Melkroboter, aufzusuchen. Die zuverlässige Gestaltung des Melkens als solches geht aus dieser Schrift nicht hervor.

Die FR 2 705 192 A schlägt ein Verfahren und eine Vorrichtung zur automatischen Milchkontrolle und eine dadurch gewonnene Kontrollprobe vor. Die Milchkontrolle soll auf diese Weise automatisch ohne Einflussnahme durch den Melker erfolgen können. Diese automatisierte Kontrolle hat keinen Einfluss auf tierbezogene Arbeitsanweisungen, die beim Melken zuverlässig ausgeführt werden sollen.

Bei der EP 0 638 231 A geht es um einen Melkroboter mit einem Computersystem, das es ermöglicht, Kühe unmittelbar nach dem Abkalben automatisch zu melken. Dieses soll ohne Einflussnahme des Melkers geschehen und ist beschränkt auf das automatische Melken von Kühen unmittelbar nach dem Abkalben.

Die WO 96/00003 A befasst sich mit der automatischen Fütterung von Kühen während des Melkens. Durch ein Identifikationssystem wird die jeweils gemolkene Kuh identifiziert. Dementsprechend wird von einem Computer die Fütterung der jeweiligen Kuh anhand der entsprechenden Vorgaben gesteuert. Auch dies geschieht ohne Einflussnahme des Melkers, sodass zwar der Melker entlastet wird, aber keine Arbeitsanweisungen erhält, deren zuverlässige Ausführung überwacht werden soll.

Bei der EP 0 551 956 A geht es um einen Melkroboter, der das Ende des Melkvorgangs der jeweiligen Kuh überwacht und zu gegebener Zeit das Melkgeschirr abnimmt. Die Überwachung der zuverlässigen Ausführungen von Arbeitsanweisungen, die der Melker während des Melkvorgangs vorzunehmen hat, ist auch hieraus nicht bekannt.

Hiervon ausgehend liegt der Erfindung die Aufgabe zugrunde, ein Verfahren zur Automatisierung der landwirtschaftlichen Milchviehhaltung zu schaffen, womit in zuverlässiger Weise eine individuelle, bedarfsgerechte Betreuung der Tiere beim Melken gewährleistet ist.

Ein Verfahren zur Lösung der der Erfindung zugrundeliegenden Aufgabe weist die Maßnahmen des Anspruchs 1 auf. Dadurch, dass tierbezogene Daten gespeichert werden, ist es möglich, jedes Tier individuell zu betreuen. Durch die zweckbezogene Anzeige der Daten des jeweiligen Tieres ist außerdem gewährleistet, unterschiedlichen Personen jeweils diejenigen Informationen zukommen zu lassen, die sie für ihre Arbeit benötigen. Beispielsweise erhält ein Melker nur Informationen darüber, ob und wie das jeweilige Tier gemolken werden muss und welche Zusatzbehandlungen gegebenenfalls beim Melken vorzunehmen sind. Irgendwelche zusätzlichen Aufzeichnungen, wie sie bisher nötig waren, werden vom erfindungsgemäßen Verfahren eliminiert. Außerdem ist sichergestellt, dass nur vertretungsweise eingesetzte Personen die jeweils zutreffenden Tätigkeiten ausführen, indem sie lückenlos angezeigt bekommen, was mit dem jeweiligen Tier zu geschehen hat. Dazu werden mindestens bestimmte zweckbezogene Daten in Form von Arbeitsanweisungen angezeigt. Die die Tiere betreuenden Personen, beispielsweise Melker, erhalten dadurch eine lückenlose und vollständige Vorgabe darüber, wie sie das jeweilige Tier zu melken oder in einer sonstigen Weise zu behandeln oder zu füttern haben. Nach der Ausführung der jeweils angezeigten Arbeitsanweisung muss eine Quittierung derselben erfolgen. Die angezeigte Arbeitsanweisung erlischt erst, wenn sie ausgeführt worden ist. Auf diese Weise wird sichergestellt, dass keine Arbeitsanweisungen ignoriert oder vergessen werden. Die Anzeige verschwindet erst dann und wird nach einer alternativen Ausgestaltung des Verfahrens durch die Anzeige einer neuen Arbeitsanweisung ersetzt, wenn die jeweils angezeigte Arbeitsanweisung zur Bestätigung ihrer Ausführung quittiert worden ist. Dadurch wird sichergestellt, dass den Personen in übersichtlicher Weise nach und nach die jeweils erforderlichen Arbeitsanweisungen zur Kenntnis gebracht und Verwechslungen vermieden werden.

Durch die Melktafel wird eine Gesamtübersicht der Daten aller Kühe, die momentan in einer Gruppe gemolken werden, bereitgestellt. Der Melker erhält so auf einen Blick Anzeigen über alle Melkdaten bei insbesondere vorzunehmenden Sonderbehandlungen der Kühe. Auf dieser Melktafel können die Daten auch sortiert angezeigt werden, beispielsweise nach Extrabehandlung beim Melken, Kontrollhinweisen, Hinweise auf Tätigkeiten, die zusätzlich zum Melken erfolgen, und zwar vor, während und/oder nach dem Melken. Darüber hinaus können in die Melktafel auch besondere Vorkommnisse vermerkt werden. Die Daten der Melktafel stammen wie Daten der Anzeigen an jedem Melkplatz aus einem zentralen Speicher bzw. Computer. Die Melktafel kann angezeigt werden von einem handelsüblichen Computerbildschirm bzw. großflächigen Anzeigentafel. Die Anzeige der Daten erfolgt auch hier im Text (Klartext bzw. Volltext).

Die Anzeige der Gesamtdaten auf der Melktafel bildet eine Vielzahl von Vorteilen: Die Melktafel verschafft dem Melker einen Überblick über alle Tätigkeiten, da auf der Melktafel Anzeigen von Daten aller Kühe der Herde oder zumindestens der sich momentan im Melkstand befindlichen Kühe erscheinen. Dadurch erhält der Melker einen kompletten Überblick. Dem Melker wird es durch die permanente Anzeige aller für ihn bestimmten Daten ermöglicht, sich auf die vorstehenden Arbeiten einzustellen. Vor allem kann der Melker vorbereitende Arbeiten vornehmen, wenn es ihm die Zeit erlaubt.

Die elektronische Melktafel bietet eine Sammelanzeige, die insbesondere in Verbindung mit den einzelnen Anzeigen am jeweiligen Melkplatz dem Melker wertvolle Hilfestellung bietet. Damit im gesamten Melkstand der Melker die gesammelten Daten der Melktafel einsehen kann, können mehrere Monitore oder sonstige Anzeigen, also mehrere Melktafeln, an verschiedenen Stellen des Melkstands positioniert sein.

Dadurch, dass die Anzeigen nicht nur auf den Melktafeln, sondern auch an den einzelnen Kühen, im Klartext oder Volltext erfolgen, wobei Abkürzungen, die das Verständnis der Anzeigen nicht beeinträchtigen, denkbar sind, können Fehler bei der Identifizierung der Anzeigen und Arbeitsanweisungen vermieden werden. Nebenaufzeichnungen (von Hand) sind nicht mehr nötig. Es ist auch kein Verlassen des Melkstands mehr erforderlich. Die Anzeigen insbesondere auf der Melktafel oder auf mehreren Melktafeln sind besonders vorteilhaft, wenn das Melkpersonal wechselt oder Vertretungen das Melken besorgen.

Gemäß einer weiteren Ausgestaltung des erfindungsgemäßen Verfahrens ist vorgesehen, dass unterschiedliche Zugangsberechtigungen zu den Daten vorgegeben werden. Dadurch wird sichergestellt, dass nur autorisierte Personen Einfluss auf die Daten nehmen können, indem sie die Daten oder Vorgaben verändern oder löschen. Somit können aus den gespeicherten Daten resultierende Arbeitsanweisungen auch nur von bestimmten Personen geändert werden. Es ist dadurch sichergestellt, dass eine zur Ausführung der Arbeitsanweisung bestimmte Person die Arbeitsanweisung nicht kurzerhand löscht. Vielmehr muss diese Person in Ermangelung einer weiterreichenden Zugangsberechtigung die angezeigte Arbeitsanweisung ausführen und quittieren, damit die Arbeitsanweisung von der Anzeige verschwindet. Damit keine Manipulationen der Gestalt möglich sind, dass eine Arbeitsanweisung zwar quittiert; aber nicht ausgeführt wird, wird vorzugsweise beim Quittieren vermerkt, wer die Ausführung der Arbeitsanweisung quittiert hat.

Weiterhin ist vorgesehen, solche Daten, die sich anhand bestimmter Zeitvorgaben ändern, beispielsweise die Dauer einer Sonderbehandlung, automatisch die Daten aktualisiert werden. Wenn z. B. von einer berechtigten Person eingegeben worden ist, dass die Milch einer bestimmten Kuh vier Tage lang nicht zur übrigen Milch gelangen darf, erscheint über diesen Zeitraum hinweg eine entsprechende Arbeitsanweisung. Nach Ablauf dieses viertägigen Zeitraums wird diese Arbeitsanweisung nicht mehr angezeigt.

Eine bevorzugte Weiterbildung der Erfindung bezieht sich auf eine zusätzliche Anzeige von Daten. Demnach werden bestimmte Daten, insbesondere Melkdaten, die zur jeweils an einem Melkplatz sich befindenden Kuh gehören, genau an diesem Melkplatz angezeigt. Die am jeweiligen Melkplatz anzuzeigenden Daten stammen aus einem zentralen Speicher, in dem die Daten aller Kühe der Herde gespeichert sind. Aus dem Speicher der Daten aller Kühle werden die Daten jeweils derjenigen Kuh entnommen, die sich auf dem Melkplatz befindet, der die jeweilige Anzeige zugeordnet ist. Die Kuh kann dabei automatisch anhand von ihr zugeordneten Sensoren erkannt werden. Alternativ ist es aber auch denkbar, dass der Melker die jeweils am Melkplatz sich befindliche Kuh identifiziert und die der betreffenden Kuh zugeordnete Identifikation, beispielsweise Nummer, am Melkplatz eingibt, woraufhin dann die speziellen Daten dieser Kuh aus dem Rechner bzw. Speicher gezielt abgerufen und zur Anzeige gebracht werden. Die genannte Anzeige (oder gegebenenfalls auch mehrere Anzeigen) kann visuell oder akustisch, aber auch aus einer Kombination von beiden erfolgen. Beispielsweise werden am Melkplatz kuhspezifische Daten im Klartext bzw. Volltext angezeigt und/oder angesagt, die sich auf den Melkvorgang beziehen. Der Melker erhält demnach am Melkplatz angezeigt oder gesagt, wie der Melkvorgang der betreffenden Kuh abläuft, indem beispielsweise angegeben wird, ob das Melkzeug am Ende des Melkvorgangs automatisch oder manuell abgezogen wird. Die akustische und/oder visuelle Anzeige kann auch dazu dienen, den Melker zu veranlassen, am Melkplatz die für die jeweilige Kuh vorgesehenen Randbedingungen des Melkbetriebs der Steuerung der Melkmaschine vorzugeben. Zu diesem Zweck kann die Anzeige am jeweiligen Melkplatz mit entsprechenden Funktionstasten versehen sein. Um den Melker darauf hinzuweisen, dass eine Funktionstaste betätigt werden muss, um beispielsweise auf eine bestimmte Abfrage zu antworten, kann die Anzeige aufleuchten oder ein anderes Signal abgeben.

Ein bevorzugtes Ausführungsbeispiel der Erfindung wird nachfolgend anhand der Zeichnung näher erläutert. In dieser zeigen:
- Fig. 1: einen schematisch dargestellten Grundriss eines Melkstands,
- Fig. 2: die Frontansicht einer Anzeige an jedem Melkplatz,
- Fig. 3: eine Vorrichtung zur Aufnahme eines Rechners, eines Monitors und einer Tastatur in einer perspektivischen Vorderansicht auf den Monitor,
- Fig. 4: einen Schnitt durch die Vorrichtung der Fig. 3, und
- Fig. 5: eine Anordnung der Vorrichtung in einem Mauerdurchbruch zwischen zwei Räumen.

Die Erfindung bezieht sich auf die Automatisierung der landwirtschaftlichen Milchviehhaltung. Im Zusammenhang mit der Milchviehhaltung stehende Abläufe des landwirtschaftliche Betriebs sollen gesteuert und überwacht werden. Es geht darum, insbesondere das Melken, die Fütterung, die Gesundheitskontrolle und die Besamung von Kühen durch eine elektronische Datenverarbeitungsanlage zu steuern und zu überwachen. Die mit der Fütterung, das Melken und die Pflege der Kühe betrauten Personen erhalten erfindungsgemäß aufgrund von in der Datenverarbeitungsanlage abgespeicherten Daten gezielte Arbeitsanweisungen, die soweit erforderlich individuell auf jede Kuh bezogen sind.

Erfindungsgemäß finden mehrere auf den Betrieb verteilte Arbeitsplatzrechner mit vorzugsweise Monitoren und einer Tastatur Verwendung. Die Arbeitsplatzrechner sind miteinander verknüpft (vernetzt), so dass an ihnen alle erforderlichen Daten, die vorzugsweise in einem zentralen Speicher gespeichert sind, verfügbar sind. Die Arbeitsplatzrechner erlauben ein voneinander unabhängiges Arbeiten vor Ort. Beispielsweise ist jeweils ein Arbeitsplatzrechner angeordnet im Melkstand im Stall, im Büro des Betriebsleiters und gegebenenfalls im Milchvorratsraum oder eine anderen geeigneten Stelle. Neben dem Betriebsleiter haben Zugriff auf die Arbeitsplatzrechner Melker und andere zur Betreuung der Kühe eingesetzte Personen, beispielsweise Personen zur Fütterung der Kühe, Tierärzte und Besamungstechniker.

Der Abruf der Daten bzw. Arbeitsanweisungen aus den einzelnen Arbeitsrechnern folgt zugangsbezogen. Der Betriebsleiter ist zum Zugang sämtlicher Daten berechtigt. Diese Berechtigung schließt auch das Ändern und gegebenenfalls Löschen sämtlicher Daten ein. Demgegenüber sind andere Personen nur berechtigt, Arbeitsanweisungen enthaltene Daten abzurufen und die Ausführung der jeweiligen Arbeitsanweisungen zu quittieren. Mit dem Füttern der Kühe beauftragte Mitarbeiter können nur fütterungsbezogene Daten und Arbeitsanweisungen abrufen, während ein Melker nur aufs Melken bezogene Daten und Arbeitsanweisungen abrufen und quittieren kann. Ebenso verhält es sich mit betriebsfremden Personen, beispielsweise Besamungstechnikern, Milchkontrolleuren, Milchwagenfahrern und Tierärzten. Diese erhalten nur Zugang zu den für ihre Tätigkeiten erforderlichen Daten und/oder Arbeitsanweisungen.

Bei den abgespeicherten Daten handelt es sich zum einen um Stammdaten jeder Kuh und gegebenenfalls der Nachzucht, beispielsweise Kälber. Die Stammdaten von Kühen verfügen darüber hinaus über Daten, die bezogen sind auf Fruchtbarkeitsperioden, Trächtigkeitsphasen, Trockenzeiten, tierärztliche Behandlungen und Befunde, Besamungen, Milchleistung, Zustand des Euters und/oder medikamentöse Behandlungen und daraus resultierende Sonderbehandlungen beim Melken, insbesondere vor, während und nach dem Melken.

Die einzelnen Mitarbeiter rufen die für ihr Tätigkeitsfeld vorgesehenen Daten, insbesondere Arbeitsanweisungen, für die jeweilige Tätigkeitsperiode ab, und zwar größtenteils individuell auf eine Kuh bezogen. Alternativ ist es denkbar, dass die Arbeitsanweisungen automatisch angezeigt werden. Wird der Datenabruf von einer Person gestartet, erscheint auf dem Bildschirm des jeweiligen Arbeitsrechners Arbeitsanweisungen für entsprechende Kühe.

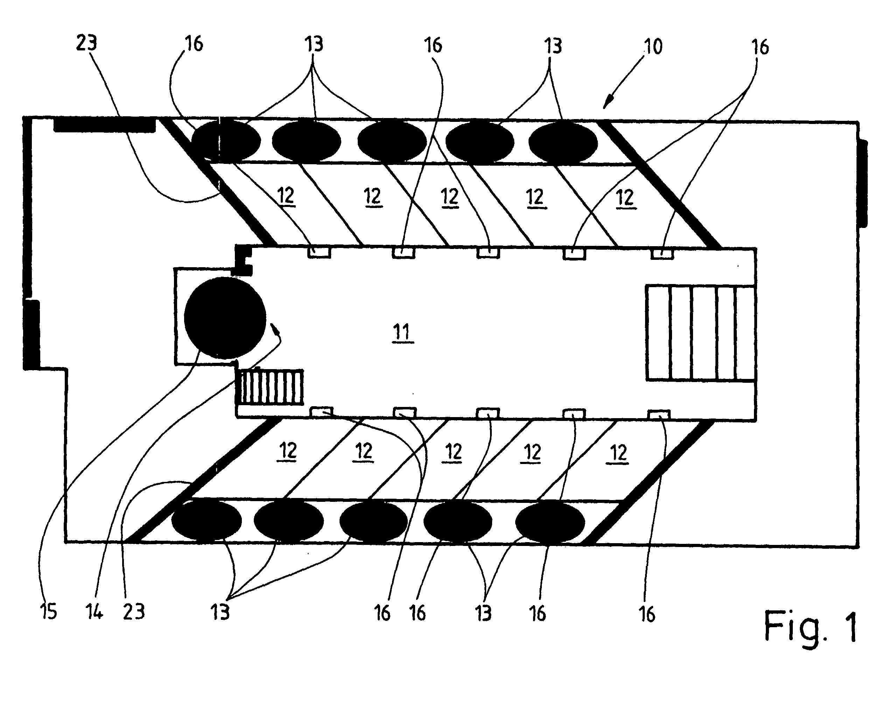

Besonders vorteilhaft lässt sich die Erfindung im Zusammenhang mit dem Melkvorgang einsetzen. Bei diesem müssen besonders vielfältige und zum Teil komplexe Informationen berücksichtigt werden. Das erfindungsgemäße Verfahren für den Melkvorgang wird in Verbindung mit der den Grundriss eines Melkstandes darstellenden Fig. 1 näher erläutert:

Beim in der Fig. 1 gezeigten Melkstand 10 handelt es sich um einen sogenannten Fischgrätenmelkstand an sich bekannter Art. Dieser Fischgrätenmelkstand 10 verfügt über eine mittige, tiefer liegende Melkergrube 11. An gegenüberliegenden Längsseiten der Melkergrube 11 befinden sich jeweils fünf Stehplätze 12 für jeweils eine nicht dargestellte Kuh. Mit dem hier gezeigten Fischgrätenmelkstand 10 sind also zur gleichen Zeit zehn Kühe zu melken. Die Erfindung eignet sich aber auch für Fischgrätenmelkstände, die jeweils mehr oder weniger als zehn Kühe aufnehmen können sowie andere Arten von Melkständen, zum Beispiel Karussellmelkstände.

Auf jedem Stehplatz 12 befindet sich eine Kuh schräg zur Längsrichtung der Melkergrube 11. Mit dem Hinterteil weist jede Kuh zur Melkergrube 11, wodurch aus der Melkergrube 11 heraus der Melker an das Euter der jeweiligen Kuh gelangen kann. Mit dem Kopf weist jede Kuh zur Seitenwand des hier gezeigten Melkstands, und zwar derart, dass die Kuh Futter aus einem jedem Stehplatz 12 zugeordneten Futtertrog 13 entnehmen kann, der durch eine automatische Fütterungsanlage mit Futter versorgbar ist. Im Melkstand ist größtenteils eine nicht gezeigte Melkanlage angeordnet. In einem ebenfalls nicht gezeigten Melkraum neben dem Melkstand befinden sich Tanks zur Aufnahme und gekühlten Lagerung der von den Kühen stammenden Milch.

Im Bereich einer in der Fig. 1 linken Stirnseite der Melkergrube 11 ist ein dem Melkstand zugeordneter Arbeitsplatzrechner zugeordnet. Dieser verfügt über den eigentlichen Rechner, einen Monitor und eine Tastatur. Der Rechner und der Monitor sind staub- und flüssigkeitsdicht in einer Schutzvorrichtung aus im wesentlichen einem Behälter 15 untergebracht. Die Tastatur ist von der Außenseite des Behälters 15 her zugänglich. Durch ein Fenster im Behälter 15 kann der Bildschirm des darin angeordneten Monitors abgelesen werden. Der Bildschirm des Monitors bildet hierbei eine Melktafel, die die relevanten Daten, insbesondere Melkdaten, aller Kühe oder eine bestimmte Gruppe von Kühen, beispielsweise alle sich momentan im Fischgrätenmelkstand 10 befindlichen Kühe, enthält. Der Melker bekommt dadurch eine Übersicht über alle Melkdaten, Arbeitsanweisungen, Sonderbehandlungen oder Tätigkeiten, die vor, während und/oder nach dem Melken auszuführen sind. Gegebenenfalls kann der Melker über die Tastatur auch die Daten, insbesondere ausgesuchte Daten, verändern oder zusätzliche Daten eingeben, beispielsweise dann, wenn er während des Melkens Beobachtungen macht, die später zu berücksichtigen sind.

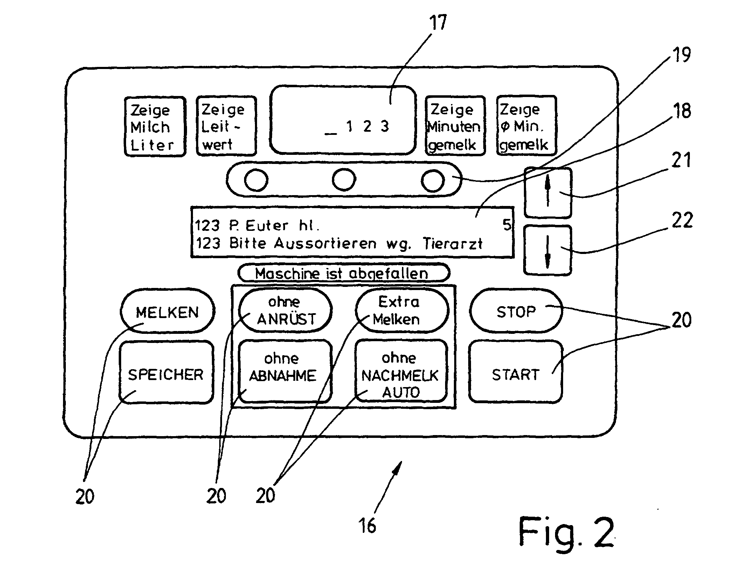

Des Weiteren ist im gezeigten Ausführungsbeispiel jedem Stehplatz 12 eine in der Fig. 1 nur andeutungsweise dargestellte individuelle Anzeigeeinheit 16 zugeordnet. Die Frontseite dieser Anzeigeeinheit 16 ist in der Fig. 2 dargestellt. Jede Anzeigeeinheit 16 korrespondiert mit einem Sender der jeweiligen Kuh. Durch diesen Sender erhält die Anzeigeeinheit 16 ein Identifikationssignal von der sich auf dem entsprechenden Stehplatz 12 befindenden Kuh. Darauf erscheinen auf dem Display 17 der Anzeigeeinheit ausgewählte Hinweise bzw. Arbeitsanweisungen, die die jeweilige Kuh betreffen, und zwar als unverschlüsselter Text, der gegebenenfalls abgekürzt sein kann. Zusätzlich oder alternativ zum Display 17 können die entsprechenden Hinweise bzw. Arbeitsanweisungen sprachlich ausgegeben werden. Der Melker erhält dadurch sozusagen computergesteuert mündliche Anweisungen.

Im oberen Display 17 der in der Figur gezeigten Anzeigeeinheit 16 erscheint die Nummer der sich auf dem jeweiligen Stehplatz 12 befindlichen Kuh. Es sind alternativ auch andere Identifikationsmerkmale möglich, wie beispielsweise Buchstaben oder sogar ein Name der Kuh.

Auf dem unteren Display 18 erscheinen in zwei Zeilen Arbeitsanweisungen. In der oberen Zeile steht hinter der jeweiligen Nummer der Kuh abgekürzt "Penicillin Euter hinten links". Der Melker weiß also, dass er diese Kuh in der hinteren linken Zitze des Euters mit Penicillin behandeln muss. In der nächsten Zeile erhält der Melker den Hinweis, dass er die Kuh aussortieren muss wegen einer Tierarztbehandlung. Diese Anzeigen verschwinden, wenn quittiert wird, dass die jeweiligen Maßnahmen ausgeführt worden sind. Um später kontrollieren zu können, wer die Maßnahmen durchgeführt hat, erfolgt das Quittieren durch Eingabe eines dem jeweiligen Melker zugeordneten persönlichen Codes. Bevor die Kuh den Stehplatz 12 verlässt, müssen beide Arbeitsmaßnahmen nach ihrer Ausführung quittiert sein, so dass das Display leer ist. Es erlischt dann auch die im oberen Display 17 angezeigte Nummer der Kuh. Sobald eine andere Kuh auf die jeweiligen Stehplatz 12 gelangt, erscheint die Identifikationsnummer dieser Kuh im oberen Display 17 und gegebenenfalls besonders durchzuführende Arbeitsanweisungen im unteren Display 18.

Darüber hinaus ist die Anzeigeeinheit 16 im gezeigten Ausführungsbeispiel der Erfindung mit einer Ampelanzeige 19 versehen. Bei dieser handelt es sich um drei farbige Leuchtdioden, nämlich eine rote, eine gelbe und eine grüne Leuchtdiode. Diese dienen dazu, dem Melker anzuzeigen, ob er die Kuh melken darf. Gesteuert wird diese Anzeige vom Arbeitsplatzrechner 14, indem die Anzeige von diesem die entsprechenden Daten erhält.

Des Weiteren befinden sich unter dem unteren Display 18 auf der Anzeigeeinheit 16 Tasten 20 zur Steuerung der Melkung, beispielsweise die Anmelk- und Abmelkphase sowie eine gegebenenfalls automatisch erfolgende Abnahme des Melkzeugs. Diese Steuerung erfolgt in Abhängigkeit von den zuletzt für die jeweilige Kuh eingegebenen Daten, die im Speicher der Anzeigeeinheit 16 gespeichert sind. Die darin zuletzt gespeicherte Steuerung der Melkung wird als Melkvorschlag angezeigt durch Blinken der entsprechenden Taste. Soll die Steuerung der Melkung für die betreffende Kuh verändert werden, erfolgt das Drücken einer anderen Taste. Es wird dann für die nächste Steuerung der Melkung der betreffenden Kuh diese neu eingestellte Steuerung abgespeichert und beim nächsten Melken dieser Kuh als neuer Melkvorschlag angezeigt durch Blinken der entsprechenden Taste.

Das untere Display 18 zur Anzeige der Arbeitsanweisungen enthält im gezeigten Ausführungsbeispiel nur zwei Zeilen für zwei Arbeitsanweisungen. Es ist aber denkbar, dass für die betreffende Kuh mehr als zwei Arbeitsanweisungen vorliegen. Dann kann im Display "geblättert" werden durch Betätigung zweier entsprechender Cursortasten 21 und 22. Wird die obere Cursortaste 21 betätigt, erscheint die nächste unter den momentan angezeigten Arbeitsanweisungen sich befindende (bisher verdeckte) Arbeitsanweisung. Wird umgekehrt die untere Cursortaste 22 betätigt, rollen die beiden Zeilen mit den in der Figur gezeigten Arbeitsanweisungen nach unten. Auf die Cursortasten 21 und 22 kann verzichtet werden, wenn das untere Display 18 größer ausgebildet wird oder eine Ausgabe der Arbeitsanweisungen durch gesprochenen Text erfolgt.

Weitere Informationen und eventuell auch Arbeitsanweisungen, die der Melker nicht von den Anzeigeeinheiten 16 erhält, kann er vom Bildschirm des Arbeitsplatzrechners 14 im Behälter 15 entnehmen, und zwar wiederum als unverschlüsselter Text. Der Bildschirm des Arbeitsplatzrechners 14 wird hierbei zu einer Art Melktafel . Diese Melktafel kann auch gesammelt alle diejenigen Informationen und gegebenenfalls auch Arbeitsanweisungen enthalten, die auf den Anzeigeeinheiten 16, die jedem Stehplatz 12 zugeordnet sind, für die jeweilige Kuh angezeigt werden. In diesem Falle werden die betreffenden Anzeigen für die jeweilige Kuh individuell an jedem Stehplatz 12 von der Anzeigeeinheit 16 gezeigt und darüber hinaus zusammengefasst noch auf dem Bildschirm (Melktafel) des Arbeitsplatzrechners 14. Hier kann gegebenenfalls auch eine Bearbeitung oder Ergänzung der Daten erfolgen, was an der individuellen Anzeigeeinheit 16 an jedem Stehplatz 12 für eine Kuh im gezeigten Ausführungsbeispiel nicht möglich ist; gegebenenfalls aber alternativ vorgesehen sein kann. Hier können auch Futterrationen angegeben werden, die die Kuh auf dem jeweiligen Stehplatz 12 im entsprechenden Futtertrog 13 während des Melkens verabreicht bekommt. Auch die Arbeitsanweisungen, die der Melker vom Bildschirm des Arbeitsplatzrechners 14 erhält, müssen, nachdem sie ausgeführt worden sind, entsprechend quittiert werden. Erst wenn alle Arbeitsanweisungen ausgeführt sind, kann die sich jeweils im Melkstand befindliche Gruppe aus insgesamt zehn Kühen aus dem Melkstand entlassen werden. Zur Verbesserung der Zuverlässigkeit der Überwachung ist es denkbar, dass die Ausgangstore 23 des Fischgrätenmelkstands 10 auf jeder Seite der Melkergrube 11 erst geöffnet werden, wenn auf dem Bildschirm des Arbeitsplatzrechners 14 alle Arbeitsanweisungen durch entsprechendes Quittieren erloschen sind und/oder die Arbeitsanweisungen auf allen individuellen Anzeigeeinheiten 16 an den Stehplätzen 12 erledigt und erloschen sind.

Der Melker kann gegebenenfalls durch eine gegenüber anderen Personen erweiterte Zugangsberechtigung erhalten, und zwar derart, dass er nach einer erfolgten Behandlung einer Kuh in den Computer eine Melksperre oder dergleichen für eine bestimmte Anzahl nachfolgender Melktermine in den Arbeitsplatzrechner 16 über seine Tastatur eingibt. Ebenso ist es denkbar, dass der Melker Informationen eingibt, die für andere Personen erforderlich sind, beispielsweise einen Besamungstechniker, wenn festgestellt wird, dass eine Kuh rindert. Ebenso kann der Melker Anweisungen an den Betriebsleiter oder einen anderen Melker, der die nächste Melkung vornimmt, eingeben. Auf diese Weise wird eine computergestützte bzw. elektronische Melktafel geschaffen, die anderweitige handschriftliche Notizen oder eine unmittelbare Weitergabe mündlicher Informationen überflüssig macht.

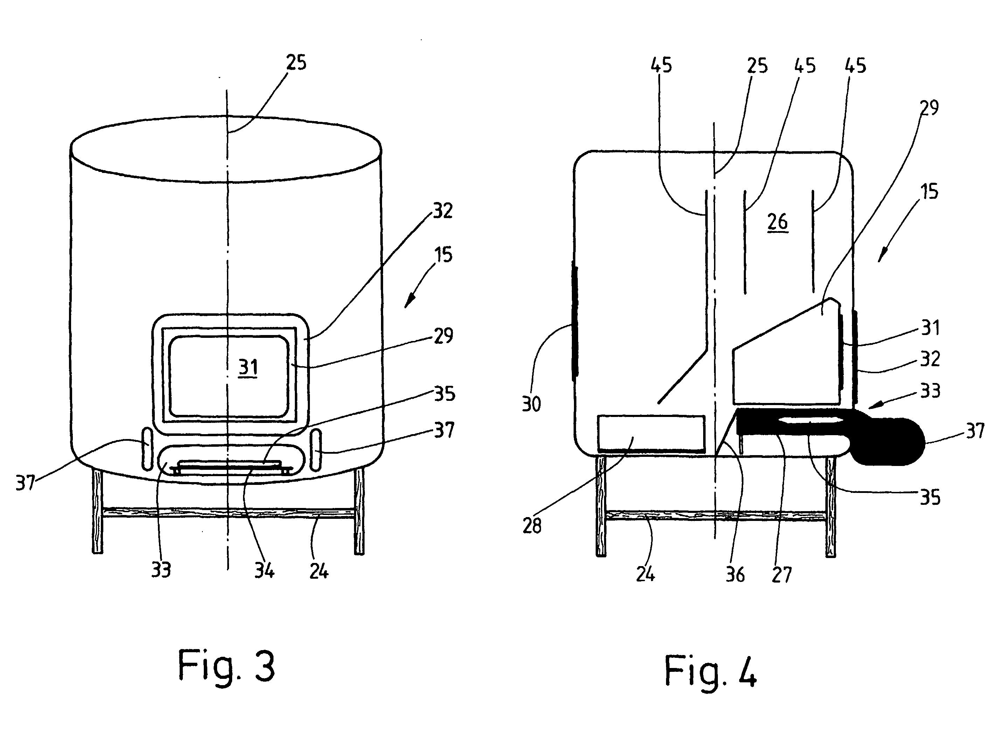

Die Fig. 3 bis 5 zeigen zwei verschiedene Ausführungsbeispiele einer Vorrichtung zum Schutz der Hardware eines im landwirtschaftlichen Betrieb eingesetzten Computersystems vor äußeren Einflüssen mechanischer und thermischer Art, Feuchtigkeit, Staub oder dergleichen.

Die in den Fig. 3 und 4 gezeigte Vorrichtung besteht im wesentlichen aus einem Behälter 15 und einem rahmenartigen Sockelunterteil 24. Der einwandige Behälter 15 ist im gezeigten Ausführungsbeispiel zylindrisch ausgebildet. Eine Längsmittelachse 25 verläuft senkrecht durch den zylinderförmigen Behälter 15. Mindestens der Behälter 15, vorzugsweise auch das Sockelunterteil 24 sind aus rostfreiem Stahl (CrNi-Stahl) hergestellt. Durch die einwandige bzw. einschichtige Ausbildung des Behälters 15 in Verbindung mit der Herstellung desselben aus rostfreiem Stahl mit einer guten Wärmeleitfähigkeit wird im Inneren von den Komponenten der Computerhardware erzeugte Wärme nach außen abgeleitet. Unterstützt werden kann diese Wärmeableitung durch einen Ventilator, der eine Luftströmung entlang mindestens eines Teils der Außenfläche des Behälters 15 herbeiführt. Beispielsweise kann ein Lüfter unter dem Behälter 15 im Bereich des Sockelunterteils 24 angeordnet sein, wobei das Sockelunterteil 24 gleichzeitig den Lüfter oder dergleichen trägt.

Das Innere des Behälter ist unterteilt in zwei Teilräume 26 und 27. Ein größerer Teilraum 26 dient zur Aufnahme eines Teils des zuvor beschriebenen Arbeitsplatzrechners 14, nämlich einer Rechnerzentraleinheit 28 und eines Monitors 29. Der Teilraum 26 zur Aufnahme der Rechnerzentraleinheit 28 und des Monitors 29 ist vollständig abschließbar. Zum Ein- und Ausbau der Rechnerzentraleinheit 28 und/oder des Monitors 29 weist im gezeigten Ausführungsbeispiel die in der Fig. 4 linke Seite des Behälters 15 eine entsprechend große Öffnung auf, die durch einen lösbaren Deckel 30 mit einer entsprechenden Dichtung luft- und wasserdicht verschließbar ist. Der Deckel 30 besteht vorzugsweise auch aus rostfreiem Stahl. Auf der dem Deckel 30 gegenüberliegenden Seite (der in der Fig. 4 rechten Seite) des Behälters 15 befindet sich vor dem Bildschirm 31 des Monitors 29 eine Abdeckscheibe 32. Diese kann aus Glas oder Kunststoff bestehen. Vorzugsweise besteht sie aus mehrschichtigem Isolierglas, wodurch ein Beschlagen der Abdeckscheibe 32 wirksam vermieden wird. Die Abdeckscheibe 32 ist so bemessen, dass von der Außenseite des Behälters 15 der komplette Bildschirm 31 des Monitors 29 abgelesen werden kann. Darüber hinaus befinden sich im Teilraum 26 Leitbleche 45, die so angeordnet sind, dass eine Luftzirkulation im Inneren des Teilraums 26 entsteht, nämlich die erwärmte Luft an den Innenwandungen des Behälters 15 stetig entlangströmt zur wirksamen Wärmeabfuhr über die Wandungen des Behälters 15 nach außen.

Der zweite (kleinere) Teilraum 27 befindet sich im gezeigten Ausführungsbeispiel unterhalb des Monitors 29. Der Teilraum 27 ist über eine unter der Abdeckscheibe 32 liegende Öffnung 33 in der zylindrischen Mantelfläche des Behälters 15 frei zugänglich. Im Teilraum 27 befindet sich auf einem Schiebetableau 34 eine Tastatur 35, die über entsprechende Kabel mit der Rechnerzentraleinheit 28 im (großen) Teilraum 26 verbunden ist. Die Durchführung der nicht gezeigten Kabel durch eine Trennwand 36 zwischen den Teilräumen 26 und 27 erfolgt flüssigkeits- und gasdicht, so dass durch den Teilraum 27 keine Feuchtigkeit, Staub oder dergleichen in den hermetisch abgedichteten Teilraum 26 gelangen kann. Wenn Eingaben vom Arbeitsplatzrechner 14 vorgenommen werden sollen, kann die Tastatur 35 mit dem Schiebetableau 34 nach vorn aus dem Teilraum 27 herausgezogen werden. Damit die Tastatur 35 nicht durch Feuchtigkeit oder dergleichen beeinträchtigt werden kann, ist sie vorzugsweise feuchtigkeits- und gasdicht ausgebildet, beispielsweise mit einer sogenannten Folientastatur versehen.

Auf gegenüberliegenden Schmalseiten der Öffnung 35 ist jeweils ein fester, vorstehender Flankenschutz 37 vorgesehen. Bei herausgezogener Tastatur 35 befindet sich diese zwischen den gegenüberliegenden Flankenschutzwandungen 37 und ist hier gegen mechanische Einflüsse wirksam geschützt.

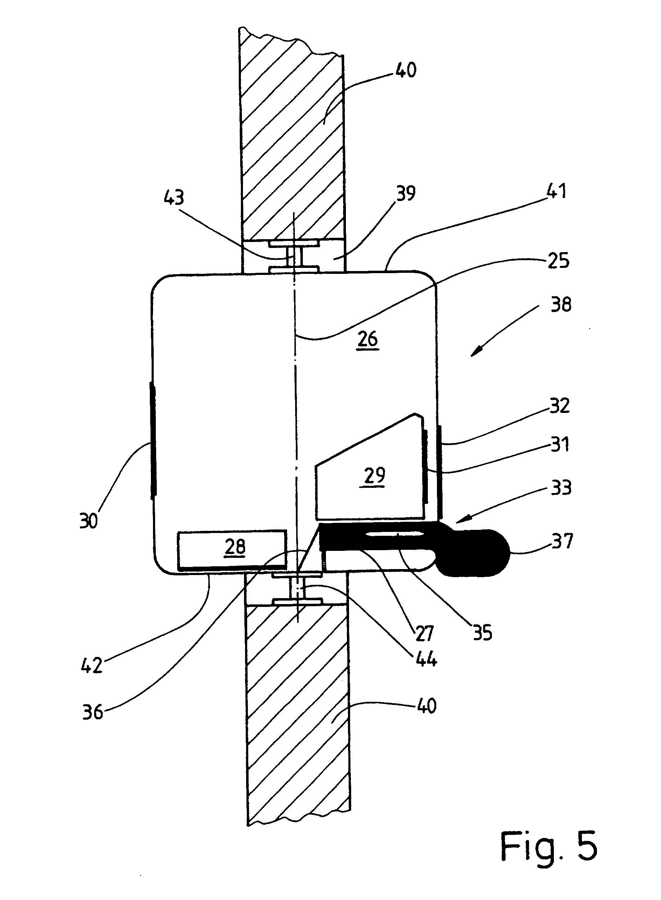

Der in den Fig. 3 und 4 gezeigte Behälter 15 eignet sich zur Anbringung an einer Stirnseite der Melkergrube 11 des bereits erläuterten Fischgrätenmelkstands 10. Demgegenüber zeigt die Fig. 5 ein anderes Ausführungsbeispiel eines Behälters 38 zum Schutz eines Arbeitsplatzrechners aus einer Rechnerzentraleinheit 28, einem Monitor 29 und einer Tastatur 35. Im prinzipiellen Aufbau entspricht der Behälter 38 dem zuvor beschriebenen Behälter 15. Deswegen finden für gleiche Teile gleiche Bezugszeichen Verwendung. Der einzige wesentliche Unterschied des Behälters 38 gegenüber dem Behälter 15 besteht darin, dass der in der Fig. 5 gezeigte Behälter 38 nicht auf einem festen Sockelunterteil 24 steht, sondern in einem entsprechenden Durchbruch 39 in einer teilweise dargestellten Wand 40 zwischen zwei benachbarten Räumen, beispielsweise einem Melkstand und einem Milchlagerraum, angeordnet ist. Diese Anordnung des Behälters 38 im Durchbruch 39 erfolgt drehbar, und zwar so, dass der Behälter 38 um seine aufrechte Längsmittelachse 25 drehbar ist. Zu diesem Zweck sind gegenüberliegende, kreisrunde und ebene Deckwandungen 41 und 42 des Behälters 38 mit jeweils einem Drehlager 43 bzw. 44 versehen.

Infolge der drehbaren Anordnung des Behälters 38 im Durchbruch 39 der Wand 40 ist es möglich, die Abdeckscheibe 32 zur Sichtbarmachung des Bildschirms 31 des Monitors 29 und die Öffnung 33 der Tastatur 35 durch einfaches Verdrehen des Behälters 38 um etwa 180° vom in der Fig. 5 rechts von der Wand 40 gezeigten Raum in den gegenüberliegenden Raum links der Wand 40 zu bringen. Auf diese Art und Weise kann ein Arbeitsplatzrechner wahlweise in einen von zwei benachbarten Räumen eingesetzt werden.

Die Anordnung des Behälters 38 mit der darin angeordneten Rechnerzentraleinheit, dem Monitor 29 und der Tastatur 35 im Durchbruch 39 der Wand 40 sorgt außerdem für eine gute Kühlung, weil im Durchbruch 39 naturgemäß ein ständiger Durchzug herrscht, der für einen ständigen Luftaustausch an der Außenseite des Behälters 38 sorgt und dabei den Innenraum, insbesondere den großen Teilraum 26 mit dem darin angeordneten wärmeentwickelnden Monitor 29 und die Rechnerzentraleinheit 28, gleichmäßig und in ausreichendem Maße abkühlt. Es kann so auf eine einen eigenen Antrieb erfordernde Fremdlüftung verzichtet werden.

## Patentansprüche

1. Verfahren zur Automatisierung der landwirtschaftlichen Milchviehhaltung, **dadurch gekennzeichnet, dass** tierbezogene Daten gespeichert und zur Bildung einer Melktafel zentral zweckbezogen für alle Kühe bzw. einzelne Gruppen von Kühen angezeigt werden, wobei mindestens ein Teil der zweckbezogenen Daten in Form von auf die jeweilige Kuh bezogene Arbeitsanweisungen angezeigt wird und die Ausführung der jeweils angezeigten Arbeitsanweisung quittiert werden muss und erst nach dem Quittieren die Daten zur Anzeige der jeweiligen Arbeitsanweisung gelöscht werden.

2. Verfahren nach Anspruch 1 oder 2, **dadurch gekennzeichnet, dass** auf der Melktafel Arbeitsanweisungen für jede Kuh, die sich momentan auf einem Stehplatz (12) im Fischgrätenmelkstand befindet, angezeigt werden.

3. Verfahren nach einem der vorhergehenden Ansprüche, dadurch gekennzeichnet, dass unterschiedliche Zugangsberechtigungen zu den Daten vergeben werden, wobei vorzugsweise eine Art der Zugangsberechtigung den Abruf, die Änderung und/oder das Löschen aller Daten umfasst und vorzugsweise eine Art der Zugangsberechtigung sich nur auf den Abruf, das Quittieren und/oder die Änderung der Daten mindestens eines speziellen Tätigkeitsfelds und/oder der angezeigten Arbeitsanweisung bezieht.

4. Verfahren nach einem der vorhergehenden Ansprüche, **dadurch gekennzeichnet, dass** die Arbeitsanweisungen bezogen auf das entsprechende Tätigkeitsfeld aufgrund eines einmaligen Startsignals fortlaufend angezeigt werden, vorzugsweise bezogen auf jeweils ein Tier.

5. Verfahren nach einem der vorhergehenden Ansprüche, **dadurch gekennzeichnet, dass** sich in regelmäßigen Zeitabständen ändernde Daten automatisch zu einem vorgegebenen oder errechneten Zeitpunkt geändert werden, insbesondere durch eine gleichzeitige Anpassung nachfolgender Arbeitsanweisungen.

6. Verfahren nach einem der vorhergehenden Ansprüche, **dadurch gekennzeichnet, dass** einzelne, tierbezogene Daten selektiert und vorzugsweise als Voll- oder Klartext angezeigt werden, insbesondere in Abhängigkeit von der Zugangsberechtigung, wobei vorzugsweise als tierbezogene Daten Melk-, Tierarzt-, Milchleistungs-, Trächtigkeits- und/ oder Fütterungsdaten verwendet werden.

7. Verfahren nach einem der vorhergehenden Ansprüche, **dadurch gekennzeichnet, dass** die Anzeige von Daten, insbesondere Melkdaten, zusätzlich zur zentralen Melktafel am jeweiligen Melkplatz bezogen auf das dort stehende Tier erfolgt.

## Claims

1. Method for automation of agricultural dairy husbandry, **characterized in that** animal-related data are stored and, for the forming of a milking chart, centrally displayed purpose-specifically for all cows or individual groups of cows, at least some of the purpose-specific data being displayed in the form of work instructions related to the respective cow and the implementation of the respectively displayed work instruction having to be acknowledged and the data for the display of the respective work instruction only being erased after the acknowledgement.

2. Method according to Claim 1 or 2, **characterized in that** work instructions for each cow which is at present at a stall (12) in the herringbone milking parlour are displayed on the milking chart.

3. Method according to one of the preceding claims, **characterized in that** different access authorizations to the data are awarded, one type of access authorization preferably comprising the retrieval, changing and/or deletion of all the data and one type of access authorization preferably relating only to the retrieval, acknowledgement and/or changing of the data of at least one specific activity field and/or the displayed work instruction.

4. Method according to one of the preceding claims, **characterized in that** the work instructions are displayed continuously with respect to the corresponding activity field on the basis of a one-off starting signal, preferably with respect to one animal in each case.

5. Method according to one of the preceding claims, **characterized in that** data changing at regular time intervals are automatically changed at a predetermined or calculated point in time, in particular by a simultaneous adaptation of subsequent work instructions.

6. Method according to one of the preceding claims, **characterized in that** individual, animal-related data are displayed in a selective manner and preferably as full or plain text, in particular in dependence on the access authorization, with milking, veterinary, milk-output, pregnancy and/or feeding data preferably being used as animal-related data.

7. Method according to one of the preceding claims, **characterized in that** the display of data, in particular milking data, takes place in addition to the central milking chart at the respective milking stall with respect to the animal standing there.

## Revendications

1. Procédé d'automatisation de l'élevage agricole de vaches à lait, **caractérisé par le fait que** des données relatives aux animaux sont enregistrées et, pour l'établissement d'un tableau de traite, affichées de manière centrale relativement à des objectifs pour toutes les vaches ou des groupes de vaches, au moins une partie des données relatives à des objectifs étant affichées sous la forme d'instructions de travail relatives à la vache et l'exécution des instructions de travail affichées devant être abandonné et les données pour l'affichage des instructions de travail étant effacées seulement après l'abandon.

2. Procédé selon la revendication 1, **caractérisé par le fait que** sur le tableau de traite sont affichées des instructions de travail pour chaque vache qui se trouve actuellement à une place debout (12) dans la salle de traite en arête de poisson.

3. Procédé selon l'une des revendications précédentes, **caractérisé par le fait que** différentes autorisations d'accès aux données sont données, de préférence, une sorte d'autorisation d'accès comprenant l'appel, la modification et/ou l'effacement de tous les données, et de préférence, une sorte d'autorisation d'accès concernant seulement l'appel, l'abandon et/ou la modification des données d'au moins un champ spécial d'activité et/ou des instructions de travail affichées.

4. Procédé selon l'une des revendications précédentes, **caractérisé par le fait que** les instructions de travail sont affichées de façon continue relativement au champ d'activité correspondant sur la base d'un signal unique de démarrage, de préférence relativement à chaque animal.

5. Procédé selon l'une des revendications précédentes, **caractérisé par le fait que** des données qui changent à intervalles de temps réguliers sont modifiées automatiquement à un instant fixé à l'avance ou calculé, en particulier par une adaptation simultanée d'instructions de travail suivantes.

6. Procédé selon l'une des revendications précédentes, **caractérisé par le fait que** des données individuelles relatives aux animaux sont sélectionnées et affichées de préférence sous forme de texte intégral ou de texte en clair, en particulier en fonction de l'autorisation d'accès, comme données relatives aux animaux étant de préférence utilisées de données de traite, de vétérinaire, de production laitière, de gestation et/ou d'affourragement.

7. Procédé selon l'une des revendications précédentes, **caractérisé par le fait que** l'affichage de données, en particulier de données de traite, est effectué, outre sur le tableau central de traite, à la stalle de traite relativement à l'animal qui s'y trouve.
